# EUROPEAN PATENT APPLICATION

(11) **EP 1 724 205 A2**
(43) Date of publication of application: **22.11.2006**
(21) Application number: 06113945.7
(22) Date of filing: 15.05.2006
(51) Int. Cl.: B65D 65/40, B65D 77/20

(54) **A container and method for forming a container**

(30) Priority: 16.05.2005 NZ 54004405; 28.06.2005 NZ 54096805
(71) Applicant: Sealed Air (New Zealand), Hamilton 2001 (NZ)
(72) Inventor: MULDER, Barry, 2001, Hamilton (NZ)
(74) Representative: De Carli, Elda

(57) **Abstract**

The invention relates to a container (1) comprising a lower container part (3) comprising a compartment (11) for receiving a product (13), and an inner film (5) comprising an antifog agent or layer and a perforated outer film (7) sealed across an opening to the compartment, a major portion of the inner film being spaced away from the outer film. The invention further comprises a method for packaging a product comprising the steps of providing a lower container part comprising a compartment, placing a product in the compartment, sealing an inner film comprising an antifog agent or layer and a perforated outer film across an opening to the compartment under a relative vacuum.

## Description

### FIELD OF THE INVENTION

The invention relates to a container and a method for forming a container or packaging a product.

### BACKGROUND OF THE INVENTION

Food products such as salads or vegetables are often packaged in a container comprising a plastics tray or a lightweight plastics pot (herein all referred to as a tray for ease of description) with a transparent layer of plastics film covering the tray and heat sealed to the rim of the tray. The film layer is sometimes referred to as a lid and is typically clear so that the consumer can clearly see the food product, generally at the time of purchase. The film may incorporate an additive referred to as an antifog additive which assists in preventing moisture from a high moisture content or respiring product such as a salad or vegetables from adversely affecting the clarity of the film, or a film intended for such a packaging application may have an antifog layer printed onto a surface of the film (being the surface which will face the product when the film is applied to close the container).

### SUMMARY OF THE INVENTION

The invention provides an improved or at least alternative container of the type described above and method of forming such a container or packaging. At least some embodiments of the invention provide advantages as are referred to subsequently.

In a first aspect, the invention broadly consists in a method for packaging a product comprising the steps of providing a lower container part comprising a compartment, placing a product in the compartment, sealing an inner film comprising an antifog agent or layer and a perforated outer film across an opening to the compartment under a relative vacuum.

Typically the inner film is a gas permeable film. Alternatively the inner film may be a gas barrier film.

Typically the lower container part is a plastics tray or alternatively a lightweight plastics pot or other container (and the term tray used herein is to be understood accordingly).

Preferably, the inner and outer films are sealed to the tray simultaneously. Alternatively, the inner and outer films may be sealed to the tray sequentially.

In a second aspect, the invention broadly consists in a method for packaging a product comprising the steps of providing a lower container part having at least two compartments, placing different products in each of the compartments, sealing an inner film comprising an antifog agent or layer and a perforated outer film across and around openings to the compartments under a relative vacuum.

In a third aspect, the invention broadly consists in a container comprising a lower container part comprising a compartment for receiving a product, and an inner film comprising an antifog agent or layer and a perforated outer film sealed across an opening to the compartment, a major portion of the inner film being spaced away from the outer film.

In a fourth aspect, the invention broadly consists in a container comprising a lower container part comprising at least two compartments for receiving products, and an inner film comprising an antifog agent or layer and an outer film sealed across and around openings to the compartments, the outer film over at least one of the compartments being perforated and the outer film over at least one other compartment being non-perforated.

Embodiments of the invention are useful in tray lidding applications as an alternative to the use of some existing non-laminated surface printed biaxially oriented polypropylene films for example, that are generally available for form, fill and seal applications but could also be used for lidding applications. Disadvantages of these films for such lidding applications in particular include that limited oxygen transmission rates may be available to match the respiration rates of the produce typical for lidding applications, and some such films are only heat sealable to polypropylene trays. Some plain co-extruded films with antifog functionality cannot be printed because the inks adversely affect the antifog additive or layer. Generally for lidding applications a heat resistant layer is needed to be laminated to the co-extruded film and the print is trapped between the two films but laminating adhesives also affect the antifog additive. Embodiments of the invention enable use of the co-extruded antifog film without having to print or laminate it (as the inner film). Any printing or laminating required may be carried out on the top or outer film.

Embodiments of the invention are also useful in tray lidding applications as an alternative to the use of existing products that require specific printing and laminating technology to achieve good antifog performance in a single printed and laminated film. Suitable products may not always be conveniently available and for applications that require very highly permeable films there may be constraints on commonly or inexpensively available materials. Furthermore, for lidding applications it is generally required that the outer surface be a heat resistant material to overcome potential film to seal-bar sticking issues especially as packaging speeds increase. However most of these materials do not provide the necessary gas permeability characteristics. Embodiments of the invention enable the use of a wide range of easily co-extruded antifog films for the inner layer with permeabilities matched to the respiration rates required by the product, while the outer film can still carry the high quality print design required for good presentation.

A further advantage of at least some embodiments of the invention is the ability to package different materials with different film permeability requirements in the same tray. For example a lettuce product requiring oxygen can be packaged with a meat product requiring no oxygen, to give a ready meal package.

The term 'comprising' as used in this specification and claims means 'consisting at least in part of, that is to say when interpreting independent claims including that term, the features prefaced by that term in each claim all need to be present but other features can also be present.

This invention may also be said broadly to consist in the parts, elements and features referred to or indicated in the specification of the application, individually or collectively, and any or all combinations of any two or more said parts, elements or features, and where specific integers are mentioned herein which have known equivalents in the art to which this invention relates, such known equivalents are deemed to be incorporated herein as if individually set forth.

The invention consists in the foregoing and also envisages constructions of which the following gives examples only.

### BRIEF DESCRIPTION OF THE DRAWINGS

Preferred embodiments of the invention are described with reference to the accompanying drawings in which:
Figure 1 is a perspective of a first embodiment of a container;
Figure 2 is a cross-section view of the container of Figure 1;
Figure 3 is a cross-section view of a second embodiment of a container;
Figure 4 is a cross-section view of a third embodiment of a container;
Figure 5 is a perspective of a fourth embodiment of a container;
Figure 6 is a cross-section view of the container of Figure 5; and
Figure 7 is a cross-section view of a fifth embodiment of a container.

### DETAILED DESCRIPTION OF THE INVENTION

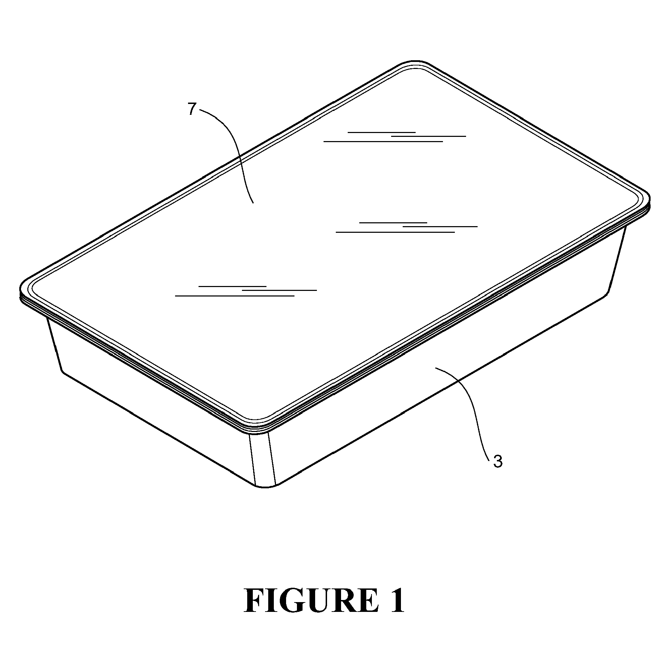

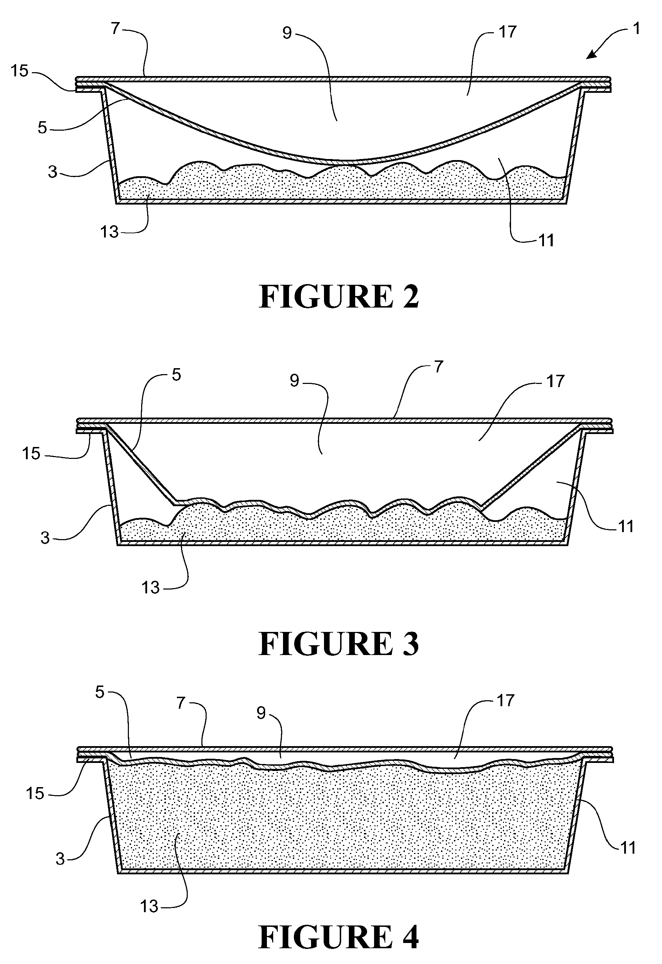

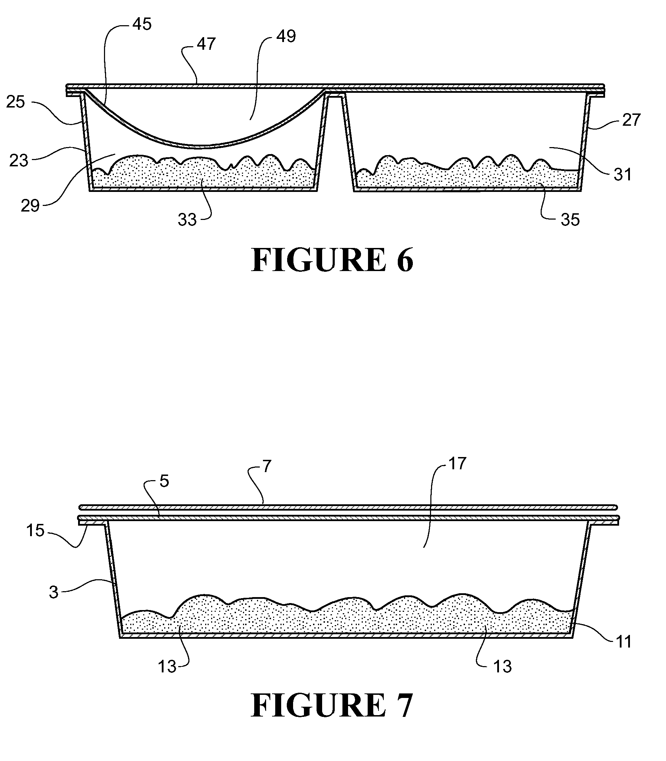

Referring to Figures 1 and 2, a first preferred embodiment of the container indicated generally by reference numeral 1 comprises a tray 3, and a first, inner film or web 5 and a perforated outer film or web 7, heat sealed to a rim 15 of the tray. The inner film 5 is spaced away from the outer film 7 towards an internal compartment 11 of the tray so that an air gap 9 is formed between the two film layers. Alternatively there may be no air gap between the films 5 and 7 after heat sealing to the tray (see Figure 7), but in either case the film layers are not laminated together with a laminating adhesive.

Air gap 9 may be created by applying a relative vacuum within the tray during sealing of the film layers 5 and 7 to the tray 3, and because the outer film layer 7 is perforated air will pass through the outer film 7 but not the inner film 5, creating the air gap 9. This separates the two film layers 5 and 7. The dimension of the air gap 9 formed i.e. the degree of separation between the two films may depend upon the vacuum level applied during sealing.
The tray 3 may be a conventional foamed plastic or thermoformed plastic tray, or a container in any other form. Alternatively the tray may be a plastics pot or other container and the term tray is used in this description for convenience. The tray comprises interior space or compartment 11 for receiving for example food product such as that indicated at 13. Rim 15 of the tray defines an opening 17 to the compartment 11, over which the inner and outer film layers 5 and 7 extend.

The inner and outer film layers 5 and 7 are preferably heat sealed to the rim 15 of the tray. The outer film 7 may be heat resistant and formed from a material having a higher melting point than that of the inner film. Typically the outer film may be formed from nylon, polypropylene or polyester, or may be a co-extruded film. Preferably, the outer film is biaxially orientated to increase its mechanical properties such as stiffness and clarity.

The outer film 7 is perforated and may be micro-perforated film such as a perforated barrier film for example. Air may pass through the outer film layer 7 during vacuum sealing the film layers to the tray causing the two film layers to separate, and subsequently air may circulate through the outer film 7 into the air gap 9. The outer film layer may be printed on its upper or lower surface with decorative material or for labelling or branding purposes.

The inner film 5 may be of any material suitable for the intended packaging application. Typically the inner film may comprise of a combination of polyethylene materials but may include other materials such as polystyrene, polypropylene, nylon or EVOH depending on the application. The inner film may also be biaxially orientated. The inner film incorporates an antifog additive, or has printed or coated thereon an antifog layer, to inhibit moisture from the product packed in the tray causing the inner film layer to fog or become opaque. Typically for packaging salad, vegetables, or fruit the inner film is a gas permeable film.

Figure 3 is a cross-section view of an embodiment of the container, similar to that of Figures 1 and 2, where a greater vacuum has been applied during sealing of the films 5 and 7 to the tray 3 than in the first embodiment, to cause a major portion of the inner film 5 to contact the product 13 on the tray 3. This substantially inhibits movement of the product 13 within the container until opened. The same reference numerals as in Figures 1 and 2 indicate the same elements.

Figure 4 is a cross-section view of an embodiment of the container in which a higher vacuum has been applied during sealing and preferably a full vacuum. The same reference numerals as in Figures 1 and 2 indicate the same elements. The container is relatively full with the product so that there is only a small air gap between the inner film 5 and the product 13. For example the product may be a meat or fish product and the inner film may be a barrier film which substantially inhibits air or gas transmission to the product and maintains a high vacuum in the package, while the outer film is a perforated film and may carry decorative or labelling or branding information and remains undistorted.

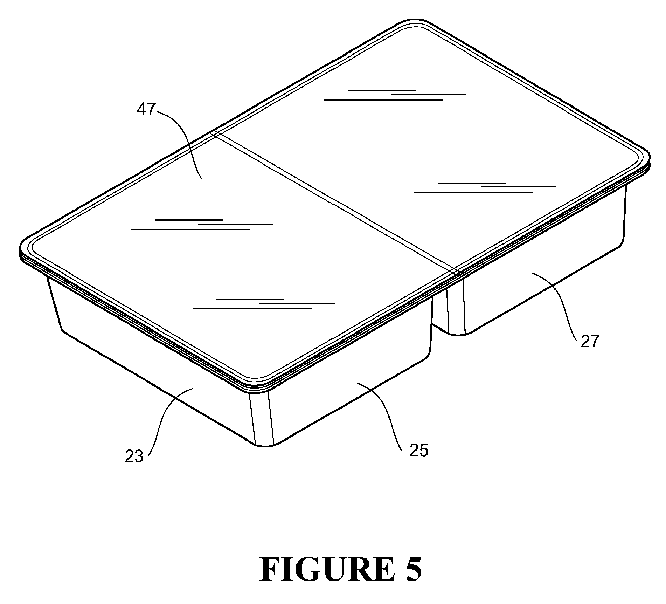

Figures 5 and 6 show a further embodiment of the container. In this embodiment, tray 23 is formed with two compartments 25 and 27 for receiving product(s) to be packaged. Typically the product 33 in one compartment 25 is a high moisture content or respiring product such as salad or lettuce for example, and the product 35 in the other compartment 27 is a protein product such as fish or meat product.

One piece of each of an inner film 45 and outer film 47 cover and are heat sealed to the rim around and dividing both compartments 25 and 27. As described previously the inner film may comprise an antifog additive or layer. The compartment 25 containing respiring produce and film layers 45 and 47 sealing it are similar to the embodiments of Figures 1 to 3, and will typically contain highly respiring produce. The inner film 45 is a gas permeable film (non-perforated). The outer film 47 is perforated over this compartment to allow air to flow freely into the air gap 49 so that the permeability of the inner film 45 governs the gas transmission to the packaged product 33.

The outer film 47 is unperforated over the compartment 27 containing the protein product.

Thus air may circulate through the outer film 47 above for example salad in compartment 25 and through the permeable antifog inner film 45 to the product in compartment 25 containing the respiring product, while non-perforation of the outer film 47 over the compartment 27 inhibits air flow to this compartment which may package meat or fish. This facilitates the packaging of two different products requiring different storage environments, in the same container.

In most embodiments described, the inner film is typically high oxygen permeable film and incorporates an antifog agent or layer, and the perforated outer film carries print decoration or labelling or branding and has heat resistance necessary for sealing both films to the tray. Readily available inexpensive films for use as the outer film would typically have lower oxygen permeability than is generally required for packaging highly respiring produce but are perforated to allow air to circulate to the inner film having higher inherent permeability. Perforation of the outer film also enables the vacuum within the container to draw the inner more permeable film away from the top film toward the bottom of the container. In the embodiment at Figures 5 and 6 the outer film is only perforated above one of the compartments separating the film layers, and providing a highly oxygen permeable environment, in this compartment of the tray only.

The embodiment of Figures 5 and 6 comprises a tray with two compartments but may have more compartments, for example three or five compartments. The outer film 47 may be perforated above any one of two, or one or two of three etc, of the compartments depending on the product to be packaged in each compartment. The permeability of the inner film is tailored to the requirement of the produce.

Figure 7 is a cross-section view of a fifth embodiment of the container. Unless otherwise indicated the same reference numerals indicate similar elements as for the embodiments of Figures 1 to 3. One or other (or both) of the film layers is a barrier film. There is no perceptible air gap between inner and outer film layers after sealing to tray 3. However, the film layers 5 and 7 are still not laminated together before application to the tray, with a laminating adhesive. This essentially achieves the same purpose as a standard printed and laminated antifog film without having to carry out the laminating stage and therefore achieves cost savings. The oxygen barrier properties of the duplex lid can be determined by either of the films. A single compartment tray is shown but the tray may have multiple compartments.

A preferred method for manufacture of the embodiments of Figures 1 to 4 and 7 is now described. The packaging method is similar to the conventional method for vacuum packing and heat sealing a film closure on a tray or other container, except that film is heat sealed from multiple rolls of film over the tray rather than one, as trays containing product move on the packing line, and after filling the trays with the product(s) to be packaged. The inner film 5 and the outer film 7 of film are drawn from different rolls and are heat sealed to each tray. It is preferred that the top web is perforated as the film is drawn off the roll and before the heat sealing stage. The films are then heat sealed to the rim 15 of the tray. A vacuum is formed in the tray during heat sealing so that two films become separated and the first film is drawn towards the tray creating air gap 9. To produce the package of Figure 7, sealing is not carried out under a vacuum and the outer web is not perforated so that the two film layers do not separate.

In manufacture of the embodiment of Figures 5 and 6 the inner film 5 and the outer film 7 are drawn from rolls to extend over both (or all) compartments of the tray and contents. The films are heat sealed to the rim 15 of the tray and so that the compartments are also sealed from one another. The outer film may be perforated over one or more selected compartments prior to being sealed to the tray. Alternatively, the outer film may be perforated during or after sealing.

The typical structure of a lidding film includes a heat resistant material or layer and a sealant material or layer. The sealant material is a co-extruded film with antifog functionality due to a masterbatch additive, or due to a printed or coated antifog ink or solution on the film after manufacture.

Non-laminated polypropylene films are available surface printed and have antifog functionality.

Embodiments of the invention offer an alternative whereby an outer film can be any heat resistant material such as standard biaxially polypropylene, nylon or polyester. These films can be reverse printed so that the print is underneath the top lidding film. The inner film carries antifog functionality and can be a co-extruded film typically of polyethylene but can include other resins such as polystyrene, polypropylene, ethylene vinyl acetate, etc. Another advantage of embodiments of the invention over the already available non-laminated antifog polypropylene films is that the oxygen transmission rate of the bottom web can be easily matched to the requirements of the product and can exceed that of many available biaxially oriented polypropylene films.

Containers of the invention can be used for products such as chilled meat or sausages where antifog functionality is required. A co-extruded inner film may incorporate an oxygen barrier material such as nylon or EVOH. Alternatively the outer heat resistant material may carry the barrier functionality.

Preferred embodiments of the invention have been described by way of example only and modifications may be made thereto without departing from the scope of the invention as defined in the accompanying claims.

## Claims

1. A container comprising a lower container part comprising a compartment for receiving a product and an inner film comprising an antifog agent or layer sealed across an opening to the compartment and a perforated outer film sealed across the opening over the inner film, a major portion of the inner film being spaced away from the outer film.

2. A container according to claim 1 wherein the outer film is a micro-perforated film.

3. A container according to either one of claims 1 and 2 wherein the inner film is a gas permeable film.

4. A container according to either one of claims 1 and 2 wherein the inner film is an oxygen barrier film.

5. A container according to any one of claims 1 to 4 wherein the lower container part is a plastics tray.

6. A container according to claim 3 containing salad, vegetable, or fruit product in said compartment.

7. A container according to claim 4 containing meat or fish product in said compartment.

8. A container according to any one of claims 1 to 7 wherein the outer film comprises decoration or labelling or branding information printed thereon.

9. A container according to claim 8 wherein the decoration or labelling or branding information is printed on the surface of the outer film which faces the inner film.

10. A container according to claim 1 comprising at least two interior compartments for receiving product, the inner film comprising an antifog agent or layer being sealed across and around the openings to each of the compartments, and the outer film being sealed across and around the openings over the inner film, the outer film over at least one of the compartments being perforated and the outer film over at least one other of the compartments being non-perforated.

11. A method for packaging a product comprising the steps of providing a lower container part having a compartment, placing a product in the compartment, and sealing an inner film comprising an antifog agent or layer and a perforated outer film across an opening to the compartment under a relative vacuum.

12. A method according to claim 11 including drawing the inner and outer films from separate film rolls and simultaneously sealing the inner and outer films to the lower container part as same moves on a packing line.

13. A method according to claim 12 including perforating the outer film as the film is drawn from a roll of film before sealing the outer film to the lower container part.

14. A method for packaging a product comprising the steps of providing a lower container part having at least two compartments, placing different products in each of at least two compartments, and sealing an inner film incorporating an antifog agent or layer and a outer film across and around openings to the compartments under a relative vacuum, the outer film being perforated over at least one of the compartments and non-perforated over at least another of the compartments.
